# EUROPEAN PATENT APPLICATION

(11) **EP 3 779 217 A1**
(43) Date of publication of application: **17.02.2021**
(21) Application number: 20190520.5
(22) Date of filing: 11.08.2020
(51) Int. Cl.: F16B 37/14, B64D 45/02

(54) **INJECTABLE CAP ASSEMBLY AND METHOD OF USE**

(30) Priority: 12.08.2019 US 201962885644 P
(71) Applicant: ASYST TECHNOLOGIES, LLC, Kenosha, WI 53144 (US)
(72) Inventor: GRIMM, Michael B., Kenosha, WI Wisconsin 53144 (US); FLADHAMMER, Scott T., Kenosha, WI Wisconsin 53144 (US)
(74) Representative: Barker Brettell LLP

(57) **Abstract**

An injectable cap assembly (100) is provided that includes a cap housing (120) with a cover portion (124) having a base (128) that extends substantially therearound, and an inner chamber (130) positioned therein, a sealant flow channel (140) extending along the base (128), a sealant input tube (132) in fluid communication with the sealant flow channel (140) and extending upwards from the base (128), a sealant output tube (142) in fluid communication with the sealant flow channel (140) and extending upwards from the base (128). The assembly (100) further includes a cap insert (122) securable within the inner chamber (130) of the cap housing (120), the insert (122) having a plurality of insert fingers (148) for engagement with a fastener (102), and a plurality of outer walls (154) interconnected with the insert fingers (148), the outer walls (154) securably engageable with the inner chamber (130).

## Description

### CROSS-REFERENCE

This application claims priority to and incorporates by reference herein U.S. Provisional Patent Application Serial No. 62/885,644 filed on August 12, 2019.

### FIELD OF THE INVENTION

This invention relates generally to the field of fastener encapsulation. More particularly, the present invention relates to isolation of a fastener using a cap assembly and injected sealant.

### BACKGROUND

Various types of interior connections, such as those found in aerospace products, require isolation of the interfay connections from leaks, electrostatic conduction, and outgassing. With regard to bolted fayed connections, sealing is typically conducted with a molded isolation cap where the sealant is inserted in the cap and then the combination is placed over the exposed end of the bolt assembly, with the excess sealant displaced from the cap onto the adjacent substrate. This excess sealant must be manually removed from the surface of the substrate and the cap. In typical aerospace products where several thousand connections must be sealed, substantial labor is required to complete the installation. In addition, as bolt assemblies generally vary in both nut choice and overall assembly height, different caps can be required to accommodate such differences.

Various known designs for isolation caps are disclosed in U.S. Patent numbers 9,400,007; 9,416,811; 10,220,957; and, 10,308,373. These known caps include several limitations, such as a limited allowance for bolt assembly variance, inconclusive verification of proper sealant application, and labor intensive installation procedures.

As such, there is a need for an improved injectable nut cap designs that may include, along with other advantageous, increased allowance for variances in bolt assembly nut height and shape, cleaner and faster installation, improved verification of sealant application, and the application of pre-loading to assist with holding the cap assembly while providing sufficient feedback during sealant introduction.

### SUMMARY OF THE INVENTION

In at least some embodiments, an injectable cap assembly is provided that includes: a cap housing comprising: a cover portion having a base that extends substantially therearound, and an inner chamber positioned therein; a sealant flow channel extending along the base; a sealant input tube in fluid communication with the sealant flow channel and extending upwards from the base; a sealant output tube in fluid communication with the sealant flow channel and extending upwards from the base; and a cap insert securable within the inner chamber of the cap housing, the insert comprising: a plurality of insert fingers for engagement with a fastener; and a plurality of outer walls interconnected with the insert fingers, the outer walls securably engageable with the inner chamber.

In at least some other embodiments, a method of sealing a fastener is provided that includes: positioning a cap assembly over a fastener protruding from a substrate, wherein the cap assembly includes a cap housing having a base that extends substantially therearound and an inner chamber positioned therein, and a cap insert selectably insertable within the inner chamber; forcibly pushing the cap assembly onto the fastener such that a plurality of insert fingers extending inwards from the insert engage a nut engagement surface of the fastener; continuing to push the cap assembly onto the fastener until a base bottom surface of the cap housing engages a top surface of the substrate; injecting sealant into a sealant flow channel that extends between the base and the top surface of the substrate, via a sealant input tube extending from the cap housing and in fluid communication with the sealant flow channel; and continuing to inject sealant until the sealant is visibly present in one or more sealant output tubes that extend from the cap housing and are in fluid communication with the sealant flow channel.

In at least some further embodiments, an injectable cap assembly is provided that includes: a cap housing comprising: a dome-shaped cover portion having a base that extends substantially therearound, and an inner chamber positioned therein; a sealant flow channel extending circumferentially along the base; a sealant input tube in fluid communication with the sealant flow channel and extending from the base; and a sealant output tube in fluid communication with the sealant flow channel and extending from the base; and a cap insert securable within the inner chamber of the cap housing, the insert comprising: a plurality of insert fingers for engagement with a fastener; and a plurality of outer walls interconnected with the insert fingers, the outer walls securably engageable with the inner chamber.

### BRIEF DESCRIPTION OF THE DRAWINGS

Embodiments of the invention are disclosed with reference to the accompanying drawings and are for illustrative purposes only. The invention is not limited in its application to the details of construction or the arrangement of the components illustrated in the drawings. The invention is capable of other embodiments or of being practiced or carried out in other various ways.
**FIG. 1** is a top perspective view of an exemplary embodiment of an injectable cap assembly secured to a fastener and sealed to a substrate.
**FIG. 2** is a side view of the substrate and fastener of FIG. 1.
**FIG. 3** is a side view of the cap assembly of FIG. 1 including a cap housing and a cap insert.
**FIG. 4** is a bottom view of the cap assembly of FIG. 3.
**FIG. 5** is a top view of the cap housing of FIG. 1.
**FIG. 6** is a cross-sectional view of the cap housing taken along lines 6-6 of FIG. 5.
**FIG. 7** is a bottom perspective view of the cap housing of FIG. 5.
**FIG. 8** is a top perspective view of the cap insert of FIG. 1.
**FIG. 9** is a top view of the cap insert of FIG. 8.
**FIG. 10** is a cross-sectional view of the cap insert taken along line 10-10 of FIG. 9.
**FIG. 11** is a top perspective view of the pre-assembled cap assembly positioned over the fastener.
**FIG. 12** is a top perspective view of the cap assembly partially installed onto the fastener.
**FIG. 13** is a top view of the cap assembly of FIG. 12.
**FIG. 14** is a cross-sectional view of the cap assembly taken along line 14-14 of FIG. 13.
**FIG. 15** is top view of the cap assembly fully installed over the fastener.
**FIG. 16** is a cross-sectional view of the cap assembly taken along line 16-16 of FIG. 15.
**FIG. 17** is a top perspective view of the cap assembly of FIG. 15 with a sealant injection nozzle inserted.
**FIG. 18** is a top perspective view of the cap assembly of FIG. 15 after sealant has been injected to form a sealing bead, with the cap housing removed for illustrative purposes.
**FIG. 19** is top view of the cap assembly installed on an alternate exemplary fastener.
**FIG. 20** is a cross-sectional view taken along line 20-20 of FIG. 19.
**FIG. 21** is a top perspective view of an exemplary alternate embodiment of the cap assembly that includes multiple sealant output tubes.

### DETAILED DESCRIPTION

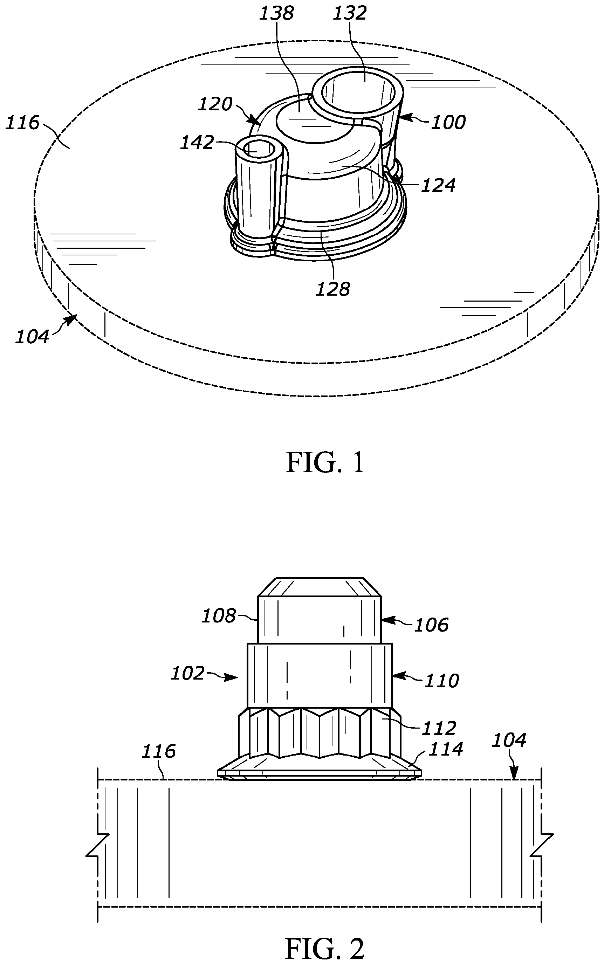

Referring to FIG. 1, a perspective view of an exemplary embodiment of an injectable cap assembly 100 is provided, wherein the injectable cap assembly 100 is shown secured to an exemplary fastener 102 (see FIG. 2) and sealed to a substrate 104. The injectable cap assembly 100 is suitable for providing a seal over a fastener, such as used to secure an interfay connection, for example an aerospace interior connection that requires isolation from leaks, electrostatic conduction, and outgassing.

The fastener 102 can include any one of various types of fasteners, such as the fastener 102 shown in FIG. 2 secured to the substrate 104. As shown in FIG. 2, the fastener 102 includes a bolt 106 having a nut engagement end 108 that includes a threaded portion for securing a nut 110 thereto. The nut 110 includes a nut interface portion 112 and can further include a base flange 114. The exemplary nut interface portion 112 shown in FIG. 2 is a bi-hex configuration, although other configurations can be utilized, such as hexagonal, Torx®, round, etc. The substrate 104 is exemplary of any one of various types of surfaces that can be securable by the fastener 102, and therefore the substrate 104 is only partially illustrated (i.e., a circular portion) as necessary to show the interface between the injectable cap assembly 100 and a substrate top surface 116 of the substrate 104.

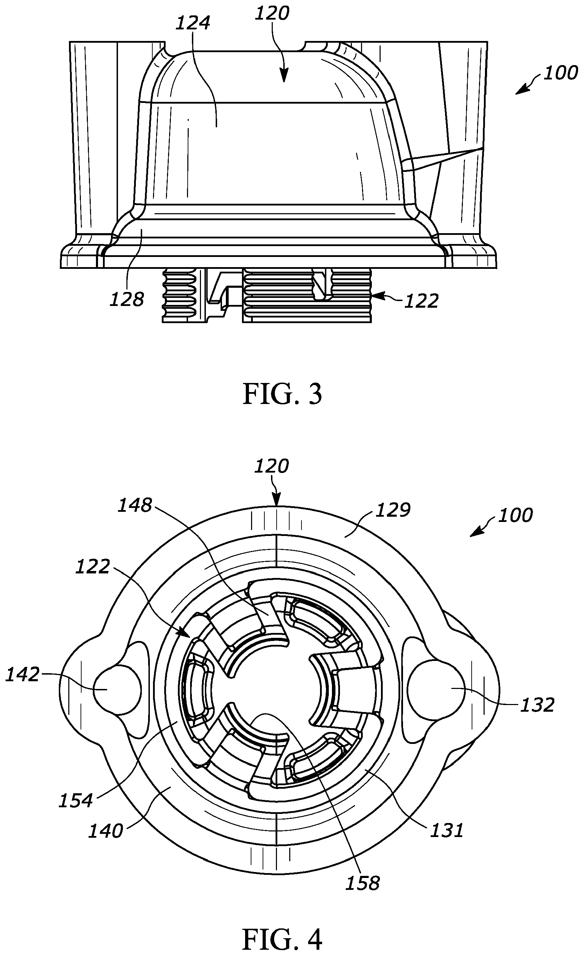

Referring to FIGS. 3 and 4, a side view and bottom view of the cap assembly 100 are respectively provided. As shown, the cap assembly 100 includes a cap housing 120 and a cap insert 122, wherein the cap insert 122 is shown partially secured inside the cap housing 120.

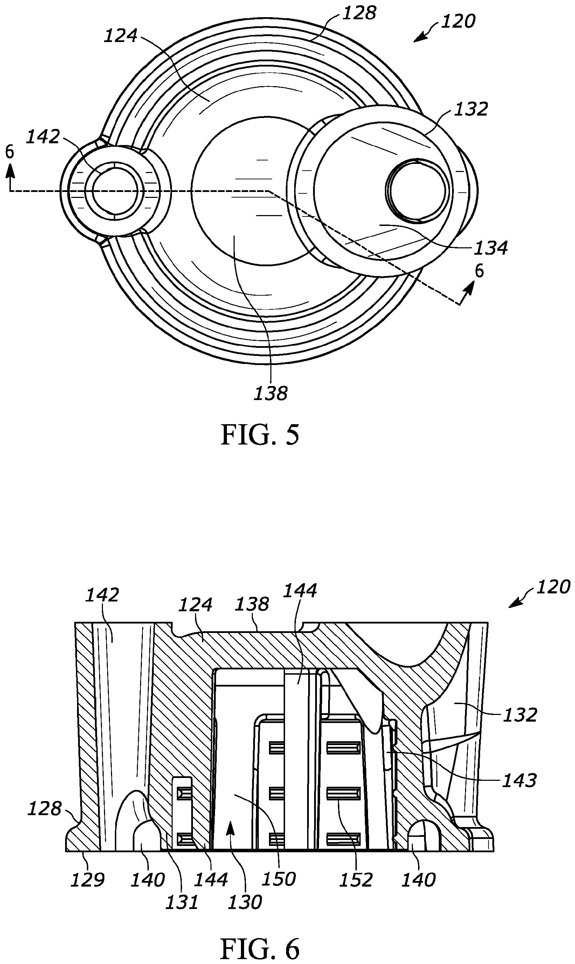

Referring to FIGS. 5-7, various views of the cap housing 120 are provided. In at least some embodiments, the cap housing 120 includes a cover portion 124 having a base 128 that extends substantially therearound and an inner chamber 130 situated therein. The cap housing 120 includes a base bottom surface 129. The cap housing 120 covers the portion of the fastener 102 that extends above the substrate top surface 116. In at least some embodiments, the cover portion 124 is generally dome-shaped (as shown), while in other embodiments other shapes can be utilized.

In at least some embodiments, the inner chamber 130 is generally cylindrical in shape and includes a chamber bottom wall 131, although other shapes can be utilized. The chamber bottom wall 131 extends around the perimeter of the inner chamber 130 to form a portion of a flow channel inner surface 133 of a flow channel 130, as discussed below. In at least some embodiments, the base 128 can be comprised in part or in whole of a rigid or semi-rigid material, while in other embodiments, the base 128 can be comprised in part or in whole of a flexible material (e.g., thermoplastic elastomer, etc.) to accommodate substrate top surfaces 116 that are not flat, allowing the base 128 to better seal against an uneven substrate top surface. In at least some embodiments where a flexible base 128 is desired, the base 128 can be chemically bonded to the cover portion 124 or can formed as a separate rubber or silicone component that is assembled to the base 128.

The cap housing 120 further includes a sealant input tube 132 for receiving a supply of liquid sealant therethrough. The sealant input tube 132 can include a funneled top portion 134 to receive a tapered sealant nozzle injector or to otherwise assist with the input of sealant. The sealant input tube 132 can take many forms, although in at least some embodiments, it comprises a generally vertically extending tube molded into the cover portion 124, and extends from about a cap housing top portion 138 downwards to a sealant flow channel 140 in the base 128.

The cap housing 120 further includes a sealant output tube 142 for receiving a supply of liquid sealant from the sealant flow channel 140, inputted via the sealant input tube 132. The sealant output tube 142 can take many forms, although in at least some embodiments, it comprises a generally vertically extending tube molded into the cover portion 124, and extends from about the cap housing top portion 138 down to the sealant flow channel 140 in the base 128. Although the sealant input tube 132 and sealant output tube 142 are shown molded into the cover portion 124, they can also be situated otherwise, such as spaced from the cover portion 124 and in fluid communication with the sealant flow channel 140. In at least some embodiments, the sealant input tube 132 and sealant output tube 142 are positioned on opposing sides of the cover portion 124 to provide an even distribution of sealant.

In at least some embodiments, the sealant flow channel 140 extends generally around the circumference of the base 128 and along the chamber bottom wall 131 to provide a sealant flow path for inputted sealant to pass from the sealant input tube 132, around the base 128, and into the sealant output tube 142. The sealant flow channel 140 can include a plurality of segments positioned between and in fluid communication with the sealant input tube 132 and sealant output tube 142. The sealant flow channel 140 can take many forms, although in at least some embodiments, it is shaped and sized to distribute a desired bead of sealant around the circumference of the fastener 102 at the abutment with the substrate 104 to provide a complete seal around the fastener 102. The size of the sealant flow channel 140 can be increased or decreased to provide the desired size bead of sealant around the fastener 102.

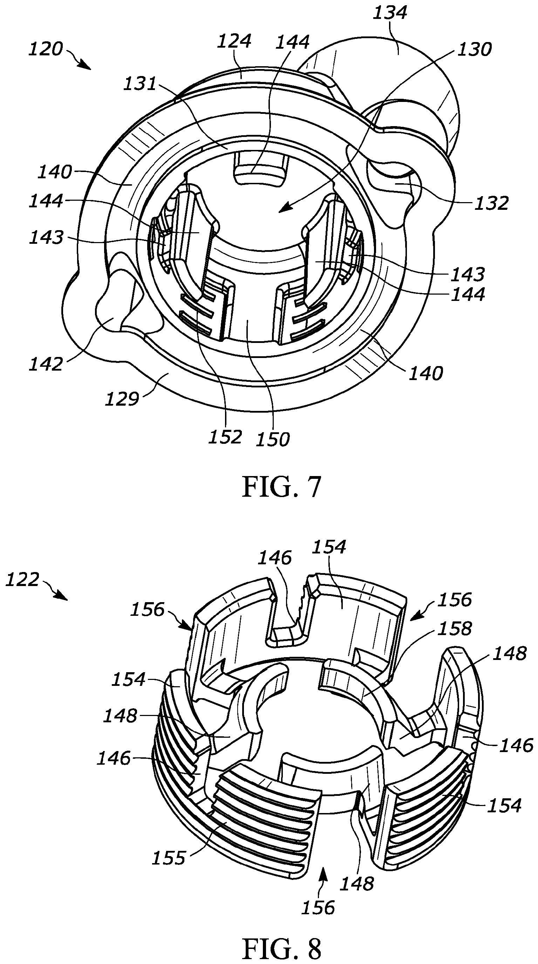

The cap housing 120 can further include several alignment features to assist with positioning and at least partially securing the cap housing 120 relative to the cap insert 122. In at least some embodiments these features include a plurality of chamber alignment tabs 143 inside the inner chamber 130, that protrude towards a plurality of outer cap deflection restriction tabs 144. The chamber alignment tabs 143 are sized and shaped to be received in a plurality of insert restriction slots 146 (FIG. 8) found in the cap insert 122. The outer cap deflection restriction tabs 144 extend downward inside the inner chamber 130 for abutment with the outer walls 154 of the insert, as discussed below, which in combination with a plurality of insert fingers 148 (FIG. 8) can assist with journaling and serve to apply pressure and restriction to the nut interface portion 112 during installation. In at least some embodiments, the chamber alignment tabs 143 can include a "T" shaped geometry, which interfaces with the insert restriction slots 146, although in other embodiments, alternate configurations can be provided that work to restrict the deflection of the cap insert 122 within the inner chamber 130, for example, a shroud wall configuration or a configuration inverting the inclusion of "T" and slot geometries. Other features can include a plurality of vertical inner wall protrusions 150 spaced along the inner chamber 130 and sized and shaped to engage the cap insert 122. The cap housing 120 can further include a plurality of cap retention tabs 152 that in at least some embodiments are positioned between the inner wall protrusions 150. In at least some embodiments, the cap retention tabs 152 are circumferentially positioned in ascending vertical groups to provide multiple levels of engagement within the inner chamber 130, such that the cap insert 122 can be secured at different heights within the inner chamber.

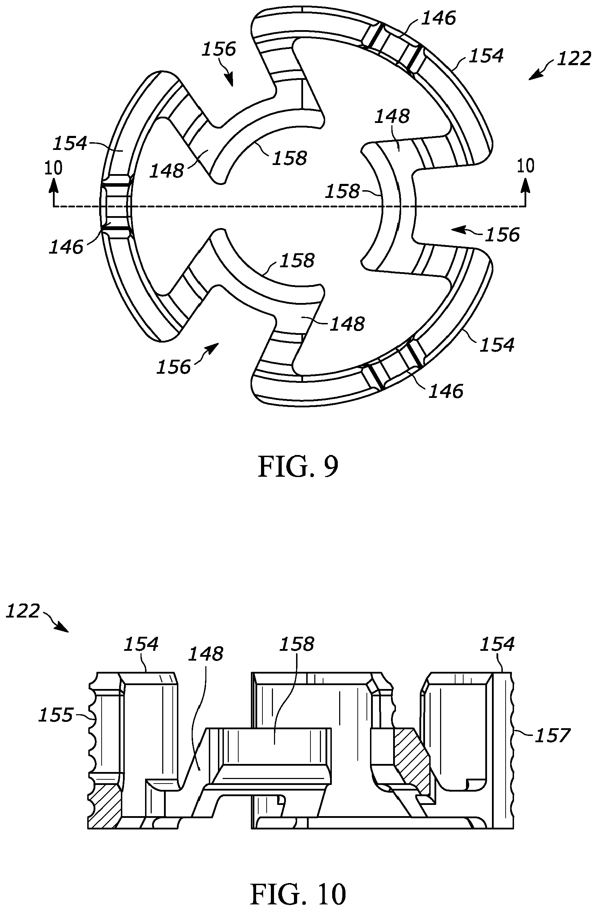

Referring to FIGS. 8-10, various views of the exemplary the cap insert 122 are provided. As noted above, the cap insert 122 is shaped and sized to be received and secured within the inner chamber 130. As such, in at least some embodiments, the cap insert 122 can be formed with a generally cylindrical shape to be matingly received within the inner chamber 130. In at least some embodiments, the cap insert 122 includes the plurality of insert fingers 148 interconnected with a plurality of outer walls 154. As shown, the cap insert 122 can include three outer walls 154 interconnected by three insert fingers 148 equally spaced between the outer walls 154, while other embodiments can utilize more or less outer walls 154 and insert fingers 148 and different spacing. In at least some embodiments, the outer wall 154 can be continuous about the circumference of the cap insert 122.

In at least some embodiments, the outer walls 154 include a plurality of insert restriction slots 146, as noted above, as well as a plurality of grooves 155 formed in a wall outer surface 157 of the outer walls 154. The grooves 155 are sized and shaped to engage the cap retention tabs 152 in the inner chamber 130. The grooves 155 and the cap retention tabs 152 allow for multiple engagement and retention heights between the cap insert 122 and the inner chamber 130, which is highly advantageous. For example, a taller nut may result in an engagement at a higher height inside the inner chamber 130, whereas a shorter nut may result in engagement at a lower height. Thus, the permissibility of multi-height engagement allows the same cap assembly 100 to be utilized with nuts of varying sizes. In at least some embodiments, inner chamber 130 can include the grooves 155 and the cap insert 122 can include the cap retention tabs 152, while in further embodiments, the grooves 155 and cap retention tabs 152 can take other forms to facilitate engagement between the cap insert 122 and the inner chamber 130.

The cap insert 122 can include outer wall gaps 156 sized and shaped to be received by the inner wall protrusions 150 in the inner chamber 130 to assist with alignment and securement. The insert fingers 148 extend inward and include a nut engagement surface 158 for engaging the nut interface portion 112 of the nut 110 and therefore can vary in shape and size to accommodate various types of nuts 110. In at least some embodiments, the nut engagement surface 158 is curved. The insert fingers 148 along with their nut engagement surfaces 158 are positioned to provide tension (e.g., biased spring tension) around the circumference of the nut interface portion 112 to forcibly secure the cap insert 122 (along with a secured cap assembly 100) to the fastener 102 when the cap insert 122 is pushed down over the nut 110.

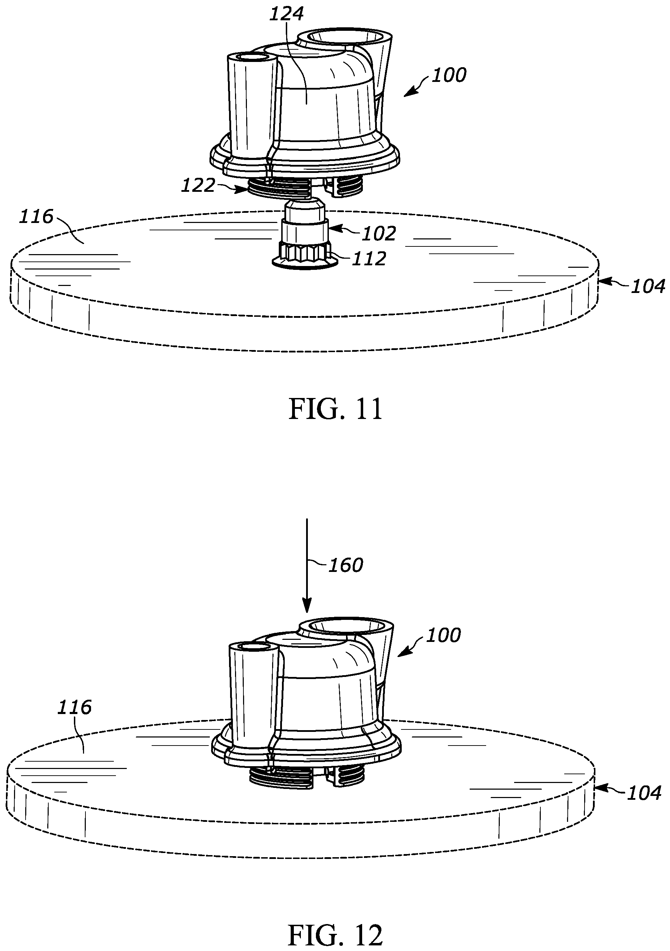

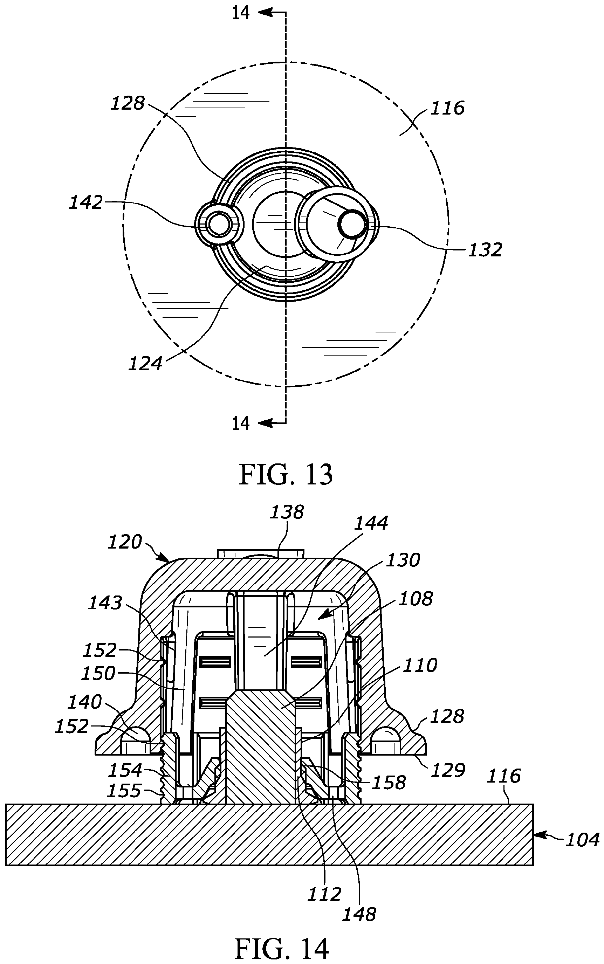

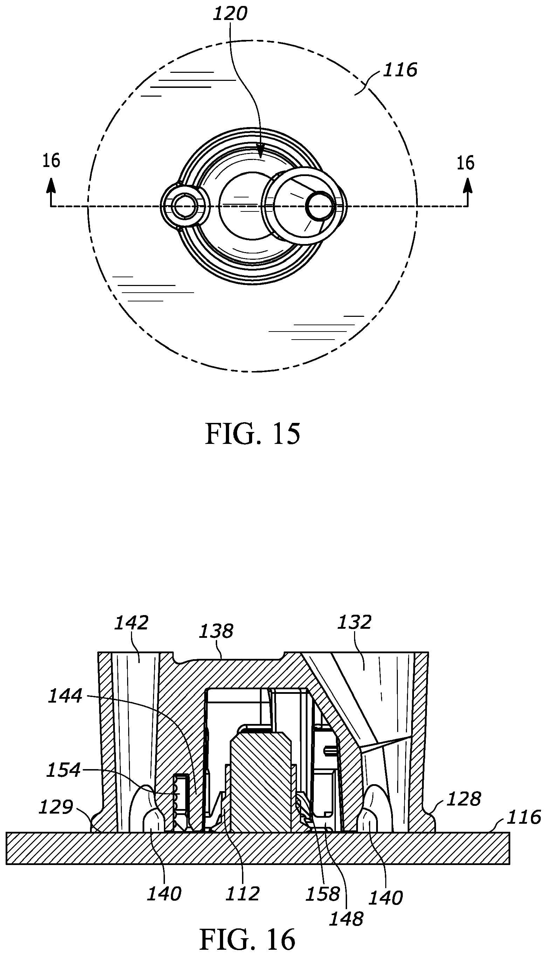

Prior to installation of the cap assembly 100 on the fastener 102, the cap insert 122 is partially inserted into the inner chamber 130 (pre-assembled state), engaging the grooves 155 with the cap retention tabs 152, to secure and align the cap insert 122 with the cap housing 120. FIG. 11 illustrates the cap assembly 100 positioned over the fastener 102 prior to installation therewith. FIGS. 12-14 illustrate the cap assembly 100 partially installed onto the fastener 102 by an applied downward force 160 on a cap housing top portion 138) with the nut engagement surfaces 158 of the insert fingers 148 having passed over the nut engagement end 108 and onto the nut interface portion 112 of the nut 110 to provide biased securement thereto. Once the cap insert 122 is fully engaged with the nut 110, additional downward force 160 is applied to the cap housing top portion 138 to further push the cap insert 122 into the inner chamber 130 until the base bottom surface 129 is fully engaged with the substrate top surface 116, as shown in FIGS. 15 and 16. Further referring to FIGS. 14 and 16 providing cross-sectional views of the cap assembly 100 and fastener 102 during and after installation, it can be seen that the various alignment and securement features are interfaced. More particularly, the outer wall gaps 156 of the cap insert 122 are aligned with the inner wall protrusions 150 to guide the insert vertically into the inner chamber 130. In addition, the plurality of chamber alignment tabs 143 inside the inner chamber 130 pass into the insert restriction slots 146 found in the cap insert 122. Further, the outer cap deflection restriction tabs 144 help maintain engagement between the cap retention tabs 152 and the grooves 155 by limiting bending within the outer walls 154 of the cap insert 122.

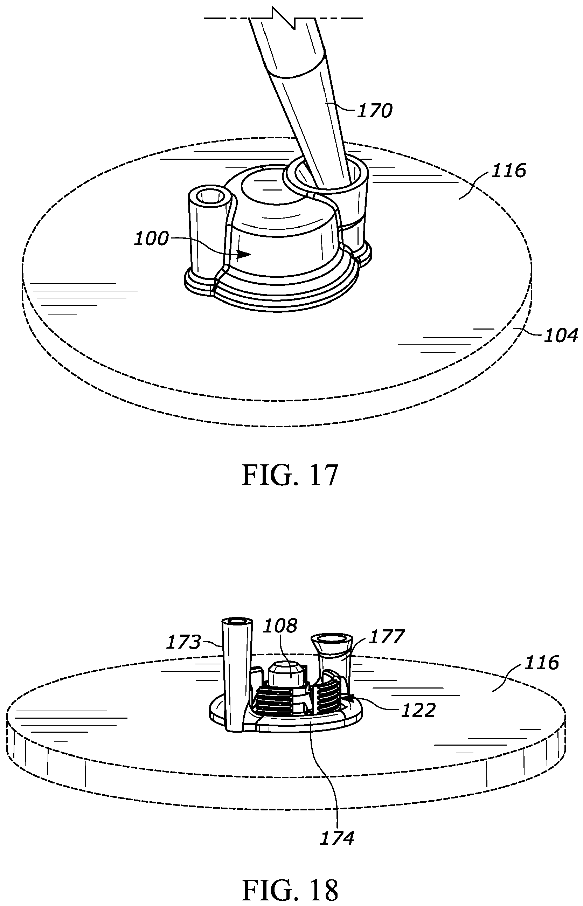

After the cap assembly 100 has been fully installed to the fastener 102 with the nut 110 positioned inside the inner chamber 130 and the base bottom surface 129 in abutment with the substrate top surface 116, a sealant can be supplied into the cap assembly 100. The sealant input tube 132, sealant flow channel 140, and sealant output tube 142 combine to provide a complete flow path for inputted sealant around the cap assembly 100, which when filled, forms a sealing bead 174 that includes the sealant that passed through the complete flow path. More particularly, in at least some embodiments, and as shown in FIG. 17, a sealant injection nozzle 170 is inserted into the sealant input tube 132 and liquid sealant is injected therein. Due to abutment with the chamber bottom wall 131, and the base bottom surface 129 with the substrate top surface 116, the sealant is forced through the sealant flow channel 140 and into the sealant output tube 142. Injection of the sealant is continued until the sealant at least partially fills the sealant output tube 142, providing a visual indication that the sealant has passed around the cap assembly 100 to form the sealing bead 174. For illustrative purposes only, the cap housing 120 of FIG. 17 is shown removed in FIG. 18 to illustrate the sealing bead 174 formed by the injected sealant, noting the sealant stacks 173 are formed by the sealant entering the sealant input tube 132 and exiting the sealant output tube 142. The sealant referenced herein can include any of various types of known sealants used to seal fasteners in a chosen industry. It shall be understood that the sealant is injected in a viscous state and that in at least some embodiments, is curable to a non-viscous state.

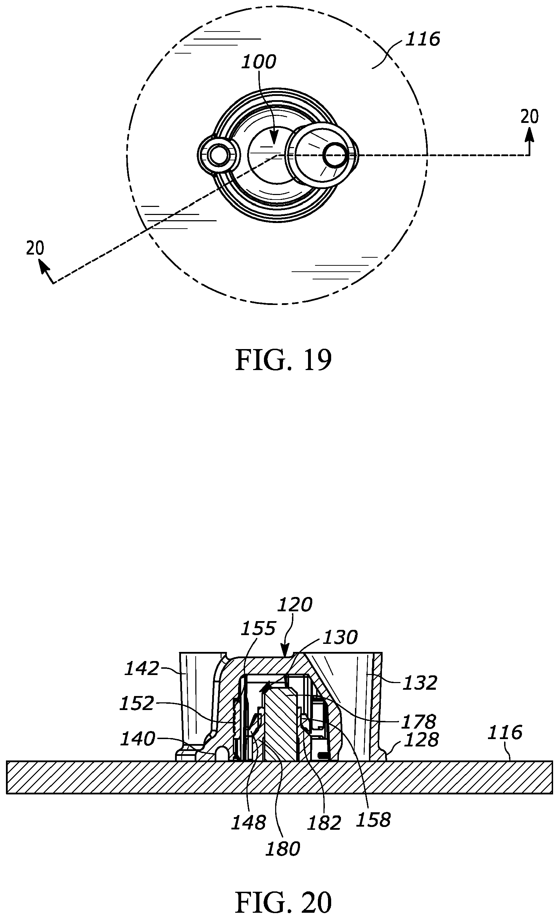

As noted above, the cap assembly 100 is configured to accommodate nuts with varied heights. FIGS. 19 and 20 illustrate the cap assembly 100 installed on an alternate fastener 178 with an alternate nut 180, which is taller than the nut 110 shown in the prior figures. As best seen in FIG. 20, the nut 180 has a taller profile than the previously illustrated nut 110, while the cap assembly 100 utilizes the same cap housing 120 and cap insert 122 components. The insert fingers 148 and nut engagement surfaces 158 have maintained positioning on a nut interface portion 182 of the nut 180. As shown in FIG. 20, the cap insert 122 has been pushed further upwards inside the inner chamber 130 as a result of the taller nut 180.

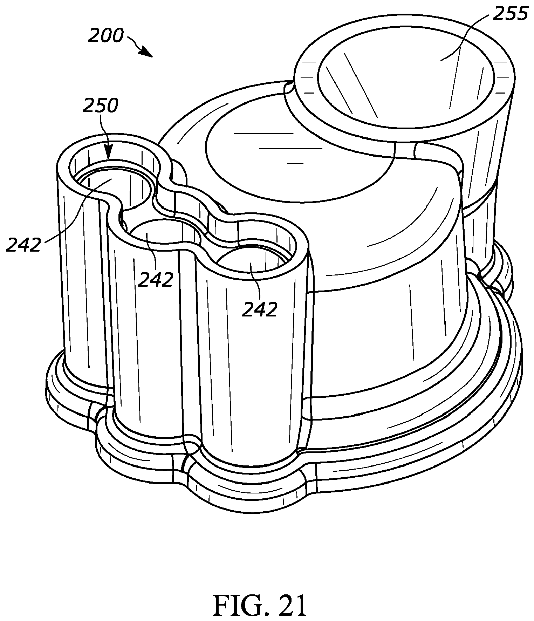

Referring to FIG. 21, a perspective view of an exemplary alternate embodiment, illustrating a cap assembly 200 similar to cap assembly 100, but with multiple sealant output tubes 242 and a sealant reservoir 250. A single sealant input tube 255 is provided, although multiple sealant input tubes 255 can be utilized. The use of additional sealant output tubes 242 can provide enhanced visual confirmation that the sealant has passed through the complete flow path. In addition, the sealant output tubes 242 can have specific desired diameters "tuned" to the sealant being injected to best assist in sealant fill visualization without inhibiting desired sealant flow patterns. The sealant reservoir 250 can provide a pooling area for the exiting sealant to limit or prevent sealant from flowing over the sealant output tubes 242 and onto the substrate, thereby providing a cleaner application.

Various aspects of the cap assembly can be modified within the spirit of the invention. In addition to the disclosed shapes and sizes (e.g., cylindrical, tubular, conical, tapered, etc.), all the aforementioned components, can vary to include numerous adaptations. Further, the material composition of all components can also include numerous elements, such as steel, aluminum, alloys, plastics, etc. The use of the term "plurality" in the description or claims shall be understood to include "one or more."

While the invention is particularly useful in sealing fasteners other applications are possible and references to use in an aerospace product application should not be deemed to limit the application of the invention. Rather, the invention may be advantageously adapted for use where similar performance capabilities and characteristics are desired, and that such modifications may be made by one of skill in the art of the invention without departing from the spirit or intent of the invention and therefore, the invention is to be taken as including all reasonable equivalents to the subject matter.

## Claims

1. An injectable cap assembly comprising:
a cap housing comprising:
a cover portion having a base that extends substantially therearound, and an inner chamber positioned therein;
a sealant flow channel extending along the base;
a sealant input tube in fluid communication with the sealant flow channel and extending upwards from the base;
a sealant output tube in fluid communication with the sealant flow channel and extending upwards from the base; and
a cap insert securable within the inner chamber of the cap housing, the insert comprising:
a plurality of insert fingers for engagement with a fastener; and
a plurality of outer walls interconnected with the insert fingers, the outer walls securably engageable with the inner chamber.

2. The assembly of claim 1, wherein the cap housing further includes a plurality of outer cap deflection restriction tabs extending downward inside the inner chamber positioned for abutment with the plurality of outer walls of the cap insert.

3. The assembly of claim 1 or of claim 2, further comprising:
a plurality of chamber alignment tabs in the inner chamber of the cap housing; and
a plurality of insert restriction slots in the plurality of outer walls of the cap insert; wherein the chamber alignment tabs are matingly receivable within the insert restriction slots.

4. The assembly of claim 1 or of claim 2 or of claim 3, wherein the cover portion is dome-shaped and the flow channel extends circumferentially around the base.

5. The assembly of claim 1 or of any of claims 2 to 4, wherein the cap insert is cylindrical and includes three spaced outer walls spaced by three insert fingers.

6. The assembly of claim 1 or of any of claims 2 to 5, wherein
(i) the sealant input tube extends vertically upwards from the flow channel, and/or
(ii) the sealant output tube extend vertically upwards from the flow channel.

7. The assembly of claim 6, parts (i) and (ii), wherein the sealant input tube and sealant output tube are integrally formed with the cap portion and the base.

8. The assembly of claim 1 or of any of claims 2 to7, further comprising:
a plurality of grooves formed in wall outer surfaces of the outer walls of the cap insert; and
a plurality of cap retention tabs spaced in the inner chamber in ascending vertical positions, wherein engagement of the cap retention tabs with the plurality of grooves provides securement of the cap housing to the cap insert at one of a plurality of selectable vertical positions.

9. The assembly of claim 1 or of claim 7 or of any preceding claim, wherein the inner chamber includes a chamber bottom wall that extends around the perimeter of the inner chamber to form an inner surface of the flow channel.

10. The assembly of claim 1 or of any preceding claim, wherein the plurality of insert fingers include nut engagement surfaces for engagement with a nut interface portion of the fastener, and optionally or preferably wherein the plurality of insert fingers are flexible and spaced to provide an inward spring tension for securing the nut engagement surfaces against the nut interface portion of the fastener.

11. The assembly of claim 1 or of any preceding claim, wherein the sealant input tube and sealant output tube are positioned on opposing sides of the cover portion and the flow channel.

12. The assembly of claim 1 or of any preceding claim, wherein two or more sealant output tubes are provided, and optionally or preferably further comprising a sealant reservoir extending between the two or more sealant output tubes to received excess sealant.

13. The assembly of claim 1 or of any preceding claim, wherein when the cap insert is secured to a fastener of a substrate having a substrate top surface, and the cap housing is secured to the cap insert with the base bottom surface abutted to the substrate top surface, injection of a sealant into the sealant input tube is directed through the flow channel and into the sealant output tube to provide a bead seal about the cap assembly, and optionally or preferably wherein the bead seal extends between the substrate top surface and the flow channel to prevent electrostatic conduction and outgassing between the cap housing and the substrate.

14. A method of sealing a fastener comprising:
positioning a cap assembly over a fastener protruding from a substrate, wherein the cap assembly includes a cap housing having a base that extends substantially therearound and an inner chamber positioned therein, and a cap insert selectably insertable within the inner chamber;
forcibly pushing the cap assembly onto the fastener such that a plurality of insert fingers extending inwards from the insert engage a nut engagement surface of the fastener;
continuing to push the cap assembly onto the fastener until a base bottom surface of the cap housing engages a top surface of the substrate;
injecting sealant into a sealant flow channel that extends between the base and the top surface of the substrate, via a sealant input tube extending from the cap housing and in fluid communication with the sealant flow channel; and
continuing to inject sealant until the sealant is visibly present in one or more sealant output tubes that extend from the cap housing and are in fluid communication with the sealant flow channel.

15. An injectable cap assembly comprising:
a cap housing comprising:
a dome-shaped cover portion having a base that extends substantially therearound, and an inner chamber positioned therein;
a sealant flow channel extending circumferentially along the base;
a sealant input tube in fluid communication with the sealant flow channel and extending from the base; and
a sealant output tube in fluid communication with the sealant flow channel and extending from the base; and
a cap insert securable within the inner chamber of the cap housing, the insert comprising:
a plurality of insert fingers for engagement with a fastener; and
a plurality of outer walls interconnected with the insert fingers, the outer walls securably engageable with the inner chamber.
